# EUROPÄISCHE PATENTSCHRIFT

(11) **EP 0 937 433 B1**
(45) Veröffentlichungstag und Bekanntmachung des Hinweises auf die Patenterteilung: **31.07.2002**
(21) Anmeldenummer: 99102252.6
(22) Anmeldetag: 05.02.1999
(51) Int. Cl.: A47J 31/50, A47J 36/34, A47J 27/21

(54) **Teekocher mit seperater Heizung im Gerätefuss**
Teecooker with separate heating in the base part
Cuiseur de thé avec chauffage séparé dans sa base

(30) Priorität: 13.02.1998 DE 19805824
(43) Veröffentlichungstag der Anmeldung: 25.08.1999
(73) Patentinhaber: Boehm, Hans-Georg, Dr. rer. nat., D-61476 Kronberg/Ts (DE)
(72) Erfinder: Boehm, Hans-Georg, Dr. rer. nat., D-61476 Kronberg/Ts (DE)

(56) Entgegenhaltungen:
- CH-A- 425 129
- DE-C- 852 896
- GB-A- 650 406
- US-A- 4 164 644
- US-A- 5 317 128

## Beschreibung

### Stand der Technik:

Teekocher mit integrierter Heizung sind als Komplettgerät bereits bekannt. Nachteilig sind dabei die voluminöse und gewichtige Heizung, die an der Unterseite des Gefäßes hängt, das Handling beim Ausgießen des Inhaltes und die Reinigung unter Wasser durch seine Elektrik erschwert. Auch die Trennung eines Teekochers mit integrierter Heizung vom Fußteil mit seiner Zuleitung - wie bei Haushalts-Wasserkochern üblich - löst das Problem nur teilweise.
Ein Heizsystem gemäß dem Oberbegriff des Anspruchs 1 ist aus dem Dokument US-A-4164644 bekannt.

### Problemlösung:

Diese Aufgabe wird durch ein Heizsystem gemäß Anspruch 1 gelöst. Weitere besondere Merkmale sind in die Unteransprüche 2-4 aufgenommen.
Ein Fortschritt ist danach dadurch erzielt, daß die Heizung vollständig in ein separates Unterteil verlegt ist und die Heizleistung auf das Kochgefäß über eine effektive Konvektion erfolgt. Die Übertragung der Heizleistung auf Gefäße aus schlecht wärmeleitendem Material wie bspw. einer Glaskanne ist besonders wirksam dadurch gelöst, daß ein im Kannenboden eingeklemmter Metallpilz (2) mit kegelförmigem Hohlschaft (3) oder einer Einbuchtung im Kannenboden (16) auf ein paßgenaues, beheiztes Gegenstück (4) im separaten Fußteil (1) aufgesteckt ist. Die hohe Wärmekapazität des Heizkegels (4) macht es zudem sinnvoll, das Fußteil als "Warmhalteplatte" mit auf den Tisch zu stellen.

Ein auf den Metallpilz oder die Einbuchtung des inneren Kannenbodens gestülptes, eng anliegendes Teefilter stellt erfindungsgemäß sicher, daß das kleine Wasservolumen zwischen der Einbuchtung des Kannenbodens (2,16) und der Einbuchtung der unteren Kalotte des Teefilters (5) schnell erhitzt wird und somit die Extraktion der Teeblätter unmittelbar nach dem Einschalten in Gang kommt. Vorteilhaft ist das zu erhitzende Wasservolumen im Teefilter noch dadurch verkleinert, daß sich im eingetauchten Zustand in seiner oberen luftdichten Kalotte oder seinem hochgezogenen Verschlußdeckel zuerst eine Luft- und später eine Dampfblase ausbildet. Dadurch wird - im Gegensatz zu Dampfblasen, die sich normalerweise verflüchtigen - die Energie des dort kondensierenden Dampfes zusätzlich zur schnelleren Extraktion genutzt. Die obere Kalotte bleibt außerdem von nassen, anhaftenden Teeblättern frei, was die spätere Reinigung erleichtert.

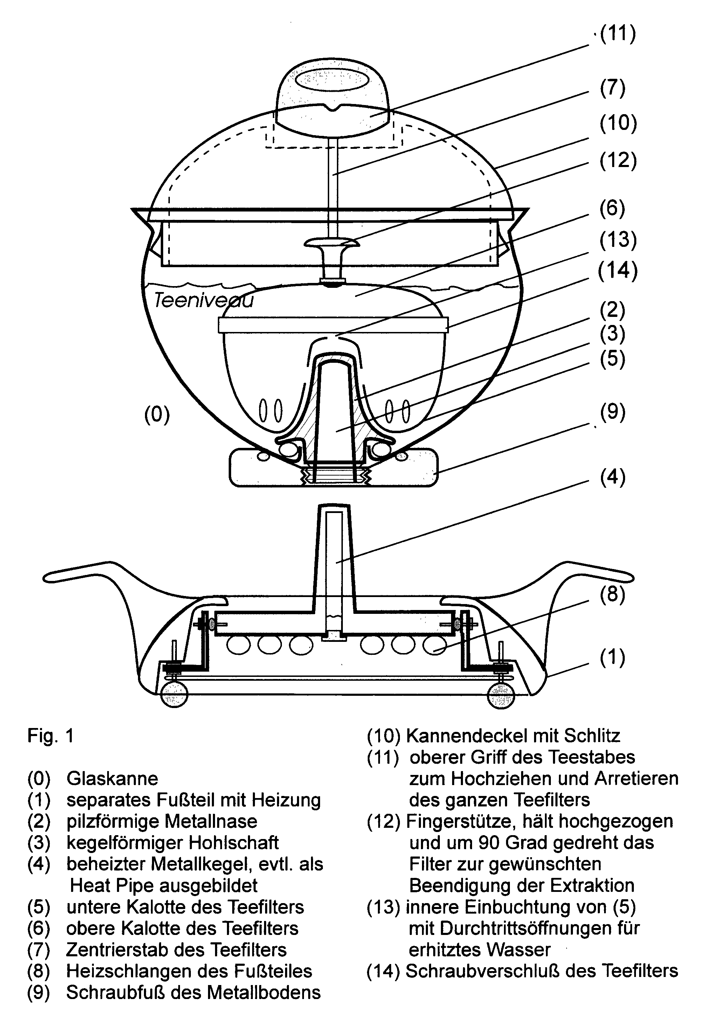

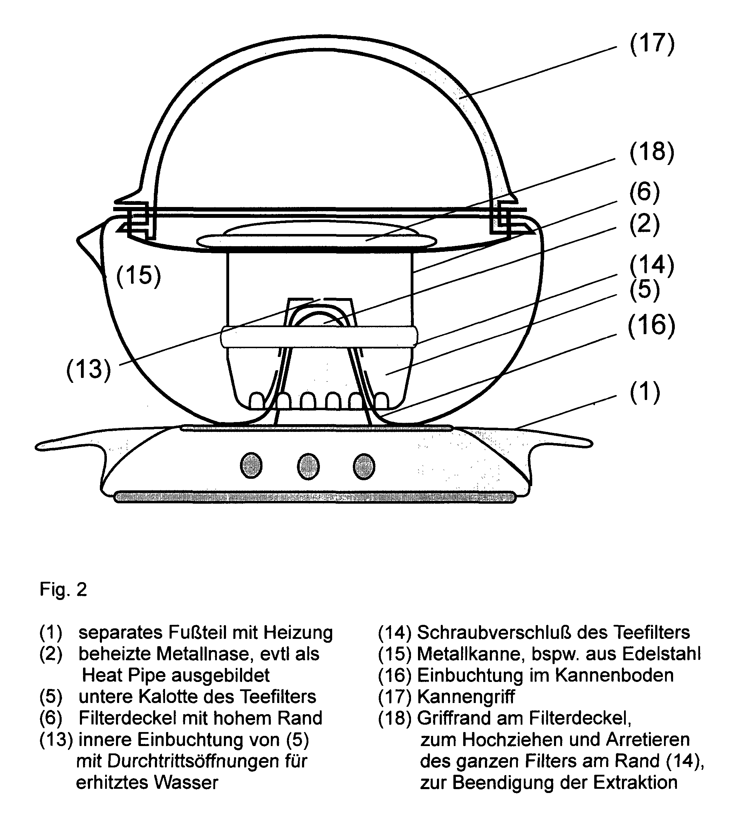

## Patentansprüche

1. Heizsystem zum Teekochen mit einer **Kanne** (0,15) aus Glas oder Metall mit einer kegelförmigen Einbuchtung (2,16) im Kannenboden, und mit einem **Fußteil** (1) mit einer Heizung (8), wobei die Einbuchtung (2,16) auf ein paßgenaues, beheiztes Gegenstück (4) des Fußteils (1) aufsteckbar ist, **dadurch gekennzeichnet, daß** ein Teefilter bestehend aus einer unteren (5) und einer oberen Kalotte (6), mittels einer Einbuchtung in der unteren Kalotte (5) eng anliegend auf die Einbuchtung (2,16) im Kannenboden gestülpt ist, wobei die Einbuchtung (2,16) im Kannenboden mit einem nach unten offenen Hohlschacht (3) versehen ist, und das beheizte Gegenstück (4) als Metallnase ausgeführt ist.

2. Heizsystem gemäß Anspruch 1 **dadurch gekennzeichnet, daß** der oberste Kulminationspunkt der Einbuchtung der unteren Kalotte (5) des Teefilters ein oder mehrere Durchtrittsöffnungen (13) für erhitztes Wasser besitzt, und daß die obere Kalotte (6) lochfrei ausgeführt und luftdicht wie eine Taucherglocke über die untere Kalotte gestülpt ist.

3. Heizsystem gemäß Anspruch 1 oder 2 **dadurch gekennzeichnet, daß** die Einbuchtung im Kannenboden als pilzförmige Metallnase (2) mit einem kegelförmigen Hohlschaft (3) ausgeführt ist, wobei die Form des Hohlschafts (3) der des Gegenstücks (4) im Fußteil (1) angepaßt ist.

4. Heizsystem gemäß einem oder mehreren der vorherigen Ansprüche 1-3, **dadurch gekennzeichnet, daß** die Heizung (8) im Fußteil (1) als "Heat Pipe" (4) ausgebildet ist.

## Claims

1. Heating systems for tea cookers with a can of glass or metal (0,15) and a cone shaped inlet (2,16) in the can bottom and a separate electric appliance (1), containing a heating system (8) on which the inlet (2,16) is adapted to a precisely matching heating nose (4) of the electric appliance (1) are caracterized by a tea filter consisting of a lower (5) and an upper cap (6), where the inlet of the lower cap cocks well fitting the inlet (2,16) of the can bottom and the inlet of the can bottom is built as an below open concave shaft and its heating contra part (4) consists of a metal nose.

2. Heating systems according to 1 are caracterized by one or several openings for heated water at the top of the inlet on the lower tea filter cap (5) and the upper filter cap (6) overlaps air tightly without wholes the lower cap like a diving-bell.

3. Heating systems according to 1 or 2 are caracterized by a mushroom shaped metal nose (2) as inlet of the can bottom containing a cone shaped shaft whole, which fits perfectly to the contra part (4) of the separate electric appliance (1).

4. Heating systems according to 1 - 3 are caracterized by a heating nose (8) of the electric appliance which is built as an heat pipe.

## Revendications

1. Systèmes de chauffage pour théières de verre ou de métal (0,15) avec un enfoncement en forme de cône (2,16) au fond de la cruche et un pied électrique (1) avec un système de chauffage (8), auquel l'enfoncement (2,16) peut être adapté précisément à la contre part chauffante (4) du pied électrique (1) sont **caractérisées par** un filtre de thé, consistant d'une calotte inférieure (5) et d'une calotte supérieure (6), qui est retroussée précisément sur l'enfoncement (2,16) au fond de la cruche et par un enfoncement (2,16), qui possède un tige ouvert en bas et dont la contre part chauffante (4) est formée comme nez de métal.

2. Systèmes de chauffage selon la revendication 1 **caractérisées par** une ou plusieures ouvertures (13) pour l'eau chaude ascendant au bout de l'enfoncement de la calotte inférieure (5) du filtre de thé et par une calotte supérieure (6), qui retrousse la calotte inférieure (5) comme une cloche de plongeur.

3. Systèmes de chauffage selon la revendication 1 ou 2 **caractérisées par** un enfoncement au fond de la cruche d'une forme de champignon consistant de métal (2) et qui contient en bas en son tige un trou (3) ouvert, qui est parfaitemant adaptable à la contre part (4) du pied éléctrique.

4. Systèmes de chauffage selon la revendication 1 - 3 **caractérisées par** un système de chauffage (8) au pied éléctrique, qui est construit comme "heat pipe".
